# EUROPÄISCHE PATENTSCHRIFT

(11) **EP 1 444 115 B1**
(45) Veröffentlichungstag und Bekanntmachung des Hinweises auf die Patenterteilung: **20.07.2005**
(21) Anmeldenummer: 02774640.3
(22) Anmeldetag: 23.09.2002
(51) Int. Cl.: B60R 21/01

(54) **VERFAHREN ZUM BESTIMMEN DER FÜR DAS AUSLÖSEN EINER PASSIVEN SICHERHEITSEINRICHTUNG IN EINEM FAHRZEUG MASSGEBLICHEN CRASHPHASEN**
METHOD FOR DETERMINING THE KEY CRASH PHASES FOR TRIGGERING A PASSIVE SAFETY DEVICE IN A VEHICLE
PROCEDE PERMETTANT DE DETERMINER LES PHASES D'IMPACT CARACTERISTIQUES D'UN VEHICULE POUR LE DECLENCHEMENT D'UN DISPOSITIF DE SECURITE PASSIF

(30) Priorität: 13.11.2001 DE 10155659
(43) Veröffentlichungstag der Anmeldung: 11.08.2004
(73) Patentinhaber: Bayerische Motoren Werke Aktiengesellschaft, 80809 München (DE)
(72) Erfinder: LINK, Andrea, 81545 München (DE); WATZKA, Willibald, 86551 Aichach (DE); URBAHN, Jan, Dr., 80797 München (DE)
(86) Internationale Anmeldenummer: PCT/EP2002/010662
(87) Internationale Veröffentlichungsnummer: WO 2003/042007

(56) Entgegenhaltungen:
- EP-A- 0 852 193
- DE-A- 4 302 399
- DE-A- 10 020 084

## Beschreibung

Die Erfindung betrifft ein Verfahren zum Bestimmen der für das Auslösen einer passiven Sicherheitseinrichtung in einem Fahrzeug maßgeblichen Crashphasen.

Ein solches Verfahren im Sinne des Oberbegriffs von Anspruch 1 ist aus der DE-4041049A bekannt. Bei Sicherheitssystemen in Kraftfahrzeugen, bei denen passive Sicherheitseinrichtungen, wie Airbags, Gurtstraffer, Überrollbügel und dergleichen im Falle eines gefährlichen Unfalls (i. f. auch als Crash bezeichnet), insbesondere eines gefährlichen Aufpralls, ausgelöst werden, um die im Fahrzeug befindlichen Personen soweit wie möglich vor Verletzungen zu schützen, ist es erforderlich, die einzelnen Sicherheitseinrichtungen jeweils zu einem optimalen Zeitpunkt auszulösen. Voraussetzung dafür ist das einwandfreie Erkennen eines Unfalls hinsichtlich Crashart und Crashschwere.

Der hierfür vorgesehene Algorithmus, der die Ausgangssignale mindestens eines Crashsensors auswertet, muss beispielsweise folgende Eigenschaften eines Crashs erkennen bzw. unterscheiden können:
- Crashbeginn
- Crashart: Offset 100% bis 25%,
- Aufprallwinkel 30° bis 90°
- Aufprallgeschwindigkeit.

Der Crash-Algorithmus muss aber nicht nur immer mehr Crashereignisse unterscheiden können, er muss darüber hinaus extrem stabil sein. Das bedeutet zum einen, dass es mit Hilfe des Algorithmus möglich sein muss, auch Unfälle (z.B. den Aufprall des Fahrzeugs gegen ein weiches Hindernis bei geringer Geschwindigkeit) zu erkennen, bei denen die Sicherheitseinrichtungen nicht (sog. NO-FIRE-Crashs) oder nur ein Teil der vorhandenen Sicherheitseinrichtungen auszulösen ist, zum anderen, dass auch die Betriebsfälle des Fahrzeugs eindeutig erkannt werden, die sich hinsichtlich des Crashsensor-Signalverlaufs von einem tatsächlichen Crash nur unwesentlich unterscheiden, beispielsweise bei einer extremen Beanspruchung des Fahrzeugs, wie sie beispielsweise bei einer schnellen Fahrt über eine Schotter-/und Schlaglochstrecke auftritt.

Eine weitere Schwierigkeit besteht darin, dass die o.g. Informationen über einen Crash zu einem sehr frühen Zeitpunkt, bezogen auf den Crashbeginn, vorliegen müssen. Ein Crash gegen ein starres Hindernis mit hoher Geschwindigkeit erfordert in der Regel einen extrem frühen Zündzeitpunkt, meistens kleiner als 10ms. Die Anzahl an Informationen, die bis zu diesem Zeitpunkt vorliegen, sind aber sehr gering und in der Regel nicht stabil. Dies gilt zumindest dann, wenn beispielsweise ein oder mehrere Beschleunigungssensoren als Crashsensoren verwendet werden und ein Schwellwert als Auslösekriterium für die Sicherheitseinrichtungen dient. Erfahrungsgemäß können auch NO-FIRE Crashs diesen Schwellwert überschreiten.

Der Erfindung liegt die Aufgabe zu Grunde, ein Verfahren zum Bestimmen der für das Auslösen einer passiven Sicherheitseinrichtung in einem Fahrzeug maßgeblichen Crashphase zu schaffen, das stabil ist und das in einem frühen Stadium eine eindeutige Erkennung der genannten Crasheigenschaften ermöglicht.

Diese Aufgabe wird durch die Merkmale des Anspruchs 1 gelöst.

Die Stabilität der Aussage über den Crash wird durch die Integralbildung erreicht. Sowohl die o.g. NO-FIRE-Fälle als auch die genannten übermäßigen Fahrzeugbeanspruchungen lassen sich bei entsprechender Vorgabe des Schwellwerts von den tatsächlichen Crashs mit notwendiger Auslösung der Sicherheitseinrichtungen unterscheiden. Durch die erfindungsgemäße Wahl der Integrationszeit des ersten Fensterintegrals wird bis zur frühest erforderlichen Auslösung der Sicherheitseinrichtung auch die Crashart bestimmbar. Sie lässt sich aus dem Wert des Fensterintegrals ableiten. Schließlich lässt sich auch der Crashbeginn ermitteln.

Der Crashbeginn kann mit Hilfe einer separaten Sensorik erkannt werden. So sind Precrash-Sensoren bekannt, die auf Objekte reagieren, die sich dem Fahrzeug nähern und bei denen aus der Annäherungsgeschwindigkeit auf einen bevorstehenden Crash geschlossen werden kann. Die Erfindung bietet demgegenüber die Möglichkeit, den Beginn des Crashs aus den Fensterintegralen selbst zurückzurechnen. Der Beginn ist gleichbedeutend mit dem Beginn der Crashphase 1. Besitzt das erste (und damit auch das zweite) Fensterintegral einen Wert, der über dem Schwellwert liegt, kann auf den Zeitpunkt zurückgerechnet werden, an dem die Integralbildung begann. Dieser entspricht dem Beginn der Crashphase 1.

Die sich an die Crashphase 1 anschließende Crashphase 2 lässt sich ebenfalls mit Hilfe der Fensterintegrale ermitteln. Die Crashphase 2 besitzt folgende Eigenschaften: Ihr Beginn hängt vom Beginn und von der Dauer der Crashphase 1 ab. Da diese Eigenschaften fest stehen, ist damit auch der Beginn der Crashphase 2 festgelegt. Dieser Zeitpunkt ist für alle Crasharten nahezu gleich, da die erstgenannten Eigenschaften der Crashphase 1 ebenfalls unabhängig von der Crashart sind.

Die Crashphase 2 liegt dann vor, wenn das zweite Fensterintegral einen größeren Wert als das erste Fensterintegral besitzt. Diese Aussage ergibt sich aufgrund der unterschiedlichen Berechnung der beiden Integrale und macht sich verarbeitungstechnisch dadurch bemerkbar, dass die beiden Fensterintegrale einen mit zunehmender Crashdauer zunehmend verschiedenen Integrationsbeginn aufweisen. Der des ersten Fensterintegrals verschiebt sich zunehmend und liegt jeweils um die Fensterlänge gegenüber dem aktuellen Zeitpunkt zurück, während das zweite Fensterintegral seinen Integrationsbeginn beibehält. Dieser ist durch den Beginn der Crashphase 1 charakterisiert.

### An Hand der Zeichnung ist die Erfindung weiter erläutert. Sie zeigt in

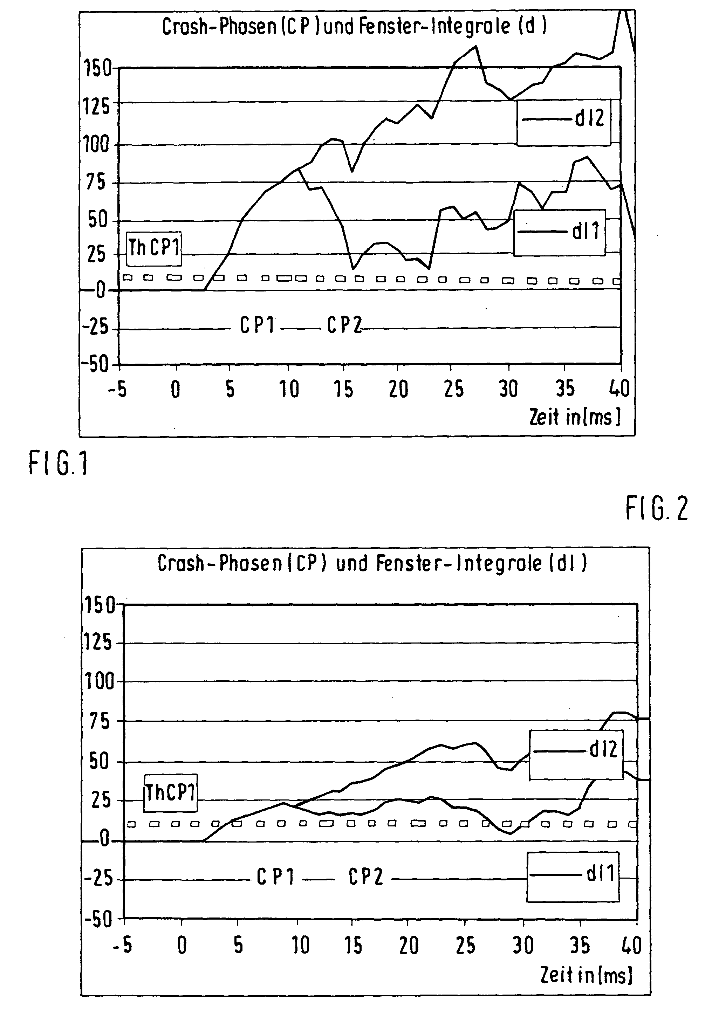

- Fig. 1: den Verlauf der Crashphasen bei einem 50 km/h Frontalcrash gegen eine starre Wand und
- Fig. 2: den Verlauf der Crashphasen bei einem 50 km/h Frontalcrash gegen eine deformierbare Barriere und 40% Offset.

Durch die Erfindung wird es möglich, die Crashphasen zu bestimmen. Dazu gehört auch die Bestimmung des Zeitpunkts, bei dem der Crash beginnt (=Beginn der Crashphase 1=CP1) und des Crashverlaufs nach Abschluss der Crashphase 1 (=Crashphase 2=CP2).

Ein für die in Fahrzeuglängsrichtung wirkende Beschleunigung (ax(t)) repräsentatives Beschleunigungssignal (ax) wird beispielsweise von einem auf Beschleunigungen in Längsrichtung ansprechenden und an einem Fahrzeugquerträger befestigten Beschleunigungssensor (nicht dargestellt) ermittelt.

Mit dem Beginn der crashbedingten Verzögerung des Fahrzeugs werden gleichzeitig zwei Fensterintegrale dl1 und dl2 gestartet, mit denen das Beschleunigungssignal (ax) über vorgegebene Zeitfenster summiert oder integriert wird. Der Wert jedes Integrals ist ein Maß für die abgebaute Geschwindigkeit. Das Integral dl1 besitzt eine Integrationszeit, die zumindest annähernd gleich bis geringfügig kleiner als die über alle Crasharten und Crashfälle betrachtet kleinste Auslösezeit von z.B. 8ms ist. Das Integral dl2 besitzt eine Integrationszeit, die mindestes doppelt so groß wie die des Integrals dl1, typischerweise gleich 24 ms ist.

Besitzen die beiden Integrale denselben Wert, der größer als ein vorgegebener Schwellwert ThCP1 ist, ergibt sich daraus:
Crashbeginn und damit Beginn der Crashphase 1 ist der Zeitpunkt Z, an dem die Fensterintegrale ansteigen. In der Figur ist dieser Zeitpunkt der Übersichtlichkeit halber gleich dem Zeitpunkt, an dem der Schwellwert ThCP1 erreicht wird. Das Ende der Crashphase 1 ist durch die Integrationszeit des Fensterintegrals vorgegeben und liegt bei ca. 8ms nach Crashbeginn (Z). Zu diesem Zeitpunkt ist sichergestellt, dass tatsächlich ein Crash vorliegt und die Sicherheitseinrichtungen aktiviert werden müssen. Die hierfür erforderlichen weiteren Informationen über die eingangs genannten Crasheigenschaften liegen ebenfalls zu diesem Zeitpunkt zumindest teilweise vor und ergeben sich aus folgenden Eigenschaften der beiden Fensterintegrale dl1 und dl2:

Der zumindest annähernd gleiche Wert der Integrale zu diesem Zeitpunkt ist ein Maß für die Aufprallgeschwindigkeit und den Aufprallwinkel.

Der in der Regel mit dem zeitlichen Abstand von diesem Zeitpunkt zunehmende Differenzwert der beiden Fensterintegrale ist für die Crashart charakteristisch. Daraus lässt auch die Crashart bestimmen bzw. die mit Hilfe des ersten Fensterintegrals vorgenommene Bestimmung der Crashart bestätigen bzw. korrigieren. Damit wird es möglich, die für die Crashphase 1 vorgenommenen Annahmen wie Crashart und voraussichtlicher Crashverlauf sowie die sich daraus ableitenden Auslösezeitpunkte für die Sicherheitseinrichtungen rückwirkend zu analysieren und soweit möglich zu korrigieren.

Damit wird es möglich, für den jeweiligen Crash die passiven Sicherheitseinrichtungen optimal auszulösen und dadurch die Fahrgäste optimal zu schützen.

## Patentansprüche

1. Verfahren zum Bestimmen der für das Auslösen einer passiven Sicherheitseinrichtung in einem Fahrzeug massgeblichen Crashphase (CP1), bei der ein für die in Fahrzeuglängsrichtung wirkende Beschleunigung (ax(t)) repräsentatives Beschleunigungssignal (ax) ermittelt und ein Fensterintegral berechnet wird, indem das Beschleunigungssignal (ax) über ein vorgegebenes Zeitfenster summiert oder integriert wird, und bei dem das Fensterintegral mit einem Schwellwert verglichen wird, **dadurch gekennzeichnet, dass** mit dem Beginn der crashbedingten Verzögerung des Fahrzeugs gleichzeitig die Berechnung eines zweiten Fensterintegrals (CP2) gestartet wird, dass das Zeitfenster (dl1) des ersten Fensterintegrals kleiner/gleich der minimalen Auslösezeit zum Auslösen der Sicherheitseinrichtung und das Zeitfenster (dl2) des zweiten Fensterintegrals wesentlich grösser als das erste Zeitfenster ist, und dass als erste Crashphase der Zeitraum festgelegt wird, für den die Fensterintegrale denselben Wert besitzen und für den dieser Wert grösser als der Schwellwert ist.

2. Verfahren nach Anspruch 1, **dadurch gekennzeichnet, dass** der Beginn der crashbedingten Verzögerung rückwirkend festgelegt wird.

3. Verfahren nach Anspruch 1 oder 2, **dadurch gekennzeichnet, dass** der Beginn der Integralberechnung in zeitlichen Abständen wiederholt wird, die wesentlich kleiner als die Integrationszeit der Fensterintegrale sind.

## Claims

1. A method for determining the key crash phase (CP1) for triggering a passive safety device in a vehicle, in which phase an acceleration signal (ax) which is representative of the acceleration (ax(t)) acting in the longitudinal direction of the vehicle is determined and a window integral is calculated, in that the acceleration signal (ax) is added or integrated via a predetermined time window, and in which the window integral is compared with a threshold value, **characterised in that** simultaneously with the start of the crash-induced deceleration of the vehicle, the calculation of a second window integral (CP2) is started, **in that** the time window (dl1) of the first window integral is smaller than/equal to the minimum triggering time for triggering the safety device and the time window (dl2) of the second window integral is substantially greater than the first time window, and **in that**, as the first crash phase, the time period is established for which the window integrals have the same value and for which this value is greater than the threshold value.

2. A method according to claim 1, **characterised in that** the start of the crash-induced deceleration is established in a retroactive manner.

3. A method according to claim 1 or 2, **characterised in that** the start of the integral calculation is repeated at time intervals which are substantially shorter than the integration time of the window integrals.

## Revendications

1. Procédé de détermination de la phase d'impact (CP1) caractéristique d'un véhicule pour déclencher un dispositif de sécurité passif, selon lequel on détermine un signal d'accélération (ax) représentatif d'une accélération (ax(t)) agissant dans la direction longitudinale du véhicule et on calcule une intégrale de fenêtre en additionnant ou en intégrant le signal d'accélération (ax) sur une fenêtre de temps prédéterminée, et selon lequel on compare l'intégrale de fenêtre à une valeur de seuil,
**caractérisé en ce que**
avec le début du ralentissement du véhicule dû à un impact, le calcul d'une seconde intégrale de fenêtre (CP2) commence simultanément, la fenêtre de temps (dl1) de la première intégrale de fenêtre étant inférieure ou égale au temps de déclenchement minimum pour déclencher le dispositif de sécurité, et la fenêtre de temps (dl2) de la seconde intégrale de fenêtre étant essentiellement supérieure à la première fenêtre de temps, et pour la première phase d'impact, on détermine la durée pendant laquelle les intégrales de fenêtre ont la même valeur et pendant laquelle cette valeur est supérieure à la valeur de seuil.

2. Procédé selon la revendication 1,
**caractérisé en ce que**
le début du ralentissement du véhicule dû à un impact est déterminé avec effet rétroactif.

3. Procédé selon la revendication 1 ou 2,
**caractérisé en ce que**
le début du calcul de l'intégrale est répété à des intervalles de temps qui sont essentiellement inférieurs au temps d'intégration des intégrales de fenêtre.
